# EUROPÄISCHE PATENTSCHRIFT

(11) **EP 3 263 318 B1**
(45) Veröffentlichungstag und Bekanntmachung des Hinweises auf die Patenterteilung: **10.11.2021**
(21) Anmeldenummer: 17170649.2
(22) Anmeldetag: 11.05.2017
(51) Int. Cl.: B29C 65/08, F04D 29/22

(54) **VERFAHREN ZUR HERSTELLLUNG EINES KREISELPUMPENLAUFRADS**
METHOD FOR PRODUCING A CENTRIFUGAL PUMP IMPELLER
PROCÉDÉ DE FABRICATION D'UNE ROUE DE POMPE CENTRIFUGE

(30) Priorität: 28.06.2016 DE 102016211605
(43) Veröffentlichungstag der Anmeldung: 03.01.2018
(73) Patentinhaber: Bühler Motor GmbH, 90459 Nürnberg (DE)
(72) Erfinder: RAUSCH, Harald, 90766 Fürth (DE)

(56) Entgegenhaltungen:
- EP-B1- 2 236 836
- WO-A1-2014/168261
- JP-A- S5 045 309
- JP-A- S5 354 301
- JP-A- S6 146 493
- JP-A- S59 103 998
- US-A1- 2015 211 523

## Beschreibung

Die Erfindung betrifft ein Verfahren zur Herstellung eines Kreiselpumpenlaufrads (1) mit einer Grundplatte (2), welche mit Pumpenflügeln (4) einstückig ist und einer Deckscheibe (3), welche aus einem thermoplastischen Kunststoffmaterial besteht, wobei Anlagebereiche vorhanden sind, welche über eine Ultraschallanregung erhitzt und aufgeschmolzen werden und nach Erkalten eine innige stoffschlüssige Verbindung bilden.

Ultraschallschweißverfahren werden seit langem zum Fügen von thermoplastischen Kunststoffen eingesetzt. Es gehört zur Gruppe der Reibschweißverfahren und unterscheidet sich durch die Art der Reibungserzeugung. Beim Reibschweißen wird in der Regel eine schnelle Drehbewegung eines Fügepartners bei Anlage am zweiten Fügepartner ausgeführt und dadurch ausreichend Wärme zur Aufschmelzung der Fügezone erzeugt. Bei nicht rotationssymmetrischen Teilen ist das Reibschweißen nicht oder nur in seltenen Fällen einsetzbar. Hier eignet sich das Ultraschallschweißverfahren besser, da hier Schwingungen mit sehr geringer Amplitude zur Gewinnung von Reibungswärme verwendet werden, somit können auch komplizierte Geometrien als Schweißzone dienen. Wichtig ist jedoch, dass die Ultraschallenergie möglichst auf eine kleine Reibfläche konzentrierbar ist.

Die JP S59 103998 A offenbart ein Kreiselpumpenlaufrad mit einer aus Kunstharz bestehenden Deckscheibe, welche mit mehreren Pumpenflügeln mit einer minimalen Wandungsdicke einstückig ist und einer aus Kunstharz bestehenden Grundplatte, welche Nuten aufweist, die mit einem Endabschnitt der Pumpenflügel in Eingriff stehen. Die Pumpenflügel werden durch Ultraschallschweißen mit den Nuten verschweißt und fixieren dadurch die Grundplatte mit der Deckscheibe.

Aus der EP 2 236 836 B1 ist ein Kreiselpumpenlaufrad bekannt, bei welchem die Pumpenflügel mit schmalen rippenähnlichen Vorsprüngen versehen sind und die Deckscheibe eine glatte kegelförmige Fläche bildet. Durch die glatte Fläche besteht keine Möglichkeit einer einfachen Vorjustage und Vormontage der Fügepartner. Zudem kann es zu Formungenauigkeiten beim Erkalten der urgeformten Deckscheibe kommen.

Die JP S61 46493A offenbart ein Verfahren zum Herstellen eines Kreiselpumpenlaufrads mit einer Deckscheibe, die mehrere Pumpenflügel aufweist und eine Grundplatte, die Nuten aufweist, mit den Verfahrensschritten: Ausbilden einer Endfläche des Pumpenflügels, um einen großen Linienkontakt mit der Deckscheibe und der Grundplatte herzustellen; Ausbilden eines Vorsprungs an der Oberfläche der Deckscheibe; Deckscheibe und Grundplatte werden durch Schmelzen der Vorsprünge durch Ultraschallschweißen fixiert; Durchführung des Schweißverfahrens in der vertieften Nut.

Aus der JP S 53 54301 A ist ein Verfahren zur Herstellung eines Kreiselpumpenlaufrads mit einer Grundplatte, welche Nuten aufweist und einer Deckscheibe, welche mehrere Pumpenflügel aufweist, an denen aufschmelzbare Rippen ausgebildet sind, bekannt. Die Pumpenflügel werden durch die aufschmelzbaren Rippen mit den Vorsprüngen in der Grundplatte durch Ultraschallschweißen fixiert.

Die JP S 50 45309 A offenbart ein zylindrisches Lüfterlaufrad, das in Gebläsen oder Ähnlichem verwendet wird, umfassend zwei Trägerplatten (3) an die jeweils Pumpenflügel (4) angeschweißt werden. In einer Trägerplatte sind Nuten mit aufschmelzbaren Rippen ausgebildet und in der anderen Trägerplatte sind Nuten ausgebildet, die mit Rippen an den Pumpenflügeln verschmolzen werden.

Aufgabe der Erfindung ist es bei einem Kreiselpumpenlaufrad aus Grundplatte und Deckscheibe für Formstabilität bei den Einzelteilen und für eine einfache und sichere Vormontage, sowie eine feste mechanische Verbindung zu sorgen, wobei nur eine geringe Anregungsenergie erforderlich ist.

Diese Aufgabe wird erfindungsgemäß durch die Merkmale des Anspruchs 1 gelöst. Die Rippen an der Deckscheibe dienen als Versteifungsrippen. Dadurch kann die Deckscheibe formgenauer hergestellt werden und eine Sonotrode gleichmäßig an der Deckscheibe anliegen. Da die Rippen Bestandteil der Deckscheibe sind dienen automatisch die angrenzenden Bereiche als Anschlagflächen, insbesondere wenn diese Bereiche aus geometrischen Gründen nicht aufgeschmolzen werden. Hierzu sind die Rippen an ihrer Basis deutlich schmaler als die Pumpenflügel an ihren den Rippen gegenüberliegenden Kopfflächen. Es ist vorgesehen, dass die Rippen (5) jeweils in einer nutartigen Vertiefung (9) in der Deckscheibe (3) angeordnet sind. Die Vertiefung (9) dient als zusätzliches Versteifungselement und vor allem als Fügehilfe. Die Breite der Vertiefung (9) ist dabei deutlich größer als die Breite der Rippen (5), so dass ein Spiel verbleibt. Um die Festigkeit der Schweißverbindung zu erhöhen und den Aufschmelzprozess zu beschleunigen sind statt einer zwei parallel verlaufende Rippen (5) je Pumpenradflügel (4) vorgesehen.

Beim Ultraschallschweißen kann es auch zu Partikelbildungen führen, deshalb ist es sinnvoll die nutartige Vertiefung (9) nur 0,1 mm bis 0,4 mm breiter auszugestalten als die Pumpenflügel (4). Auf diese Weise bleiben insbesondere größere Partikel innerhalb der Vertiefung (9) gefangen.

Weiterbildungen der Erfindung werden in den Unteransprüchen dargestellt. Es ist vorgesehen, dass in der Deckscheibe (3) zwei Anschlagflächen (7) vorgesehen sind, die sich beiderseits der Rippen (5) erstrecken. Dadurch können sich die Pumpenflügel (4) an der Deckscheibe (3) abstützen.

Eine noch bessere Abstützung ist gewährleistet, wenn auch die in Rippenlängsrichtung anschließenden Anschlagzonen (23) als Abstützzonen dienen. Hierdurch sind die Rippen (5) vollumfänglich von Abstützflächen/Abstützzonen umgeben. Dies führt zu einer definierten geometrischen Zuordnung zwischen der Grundplatte (2) und der Deckscheibe (3).

In Weiterbildung der zweiten Ausführungsform verläuft zwischen den Anschlagflächen (7) und den Rippen (5) jeweils eine freisparungsartige Nut (8) entlang der Rippen (5). Diese Nuten (8) dienen dazu die Ultraschallenergie noch besser auf die Schweißstelle zu konzentrieren.

Weiter ist vorgesehen, dass die Vertiefung (9) mit zunehmender Tiefe enger wird und die Pumpenflügel (4) sich an ihren der Deckscheibe (3) zugewandten Enden verjüngen. Dadurch verengt sich der Spalt zwischen den Pumpenflügeln (4) und der Vertiefung (9) beim Schweißvorgang und entstehende Partikel werden zudem eingeklemmt und teilweise aufgeschmolzen und stoffschlüssig fixiert. Ausführungsbeispiele der Erfindung sowie für das Verständnis der Erfindung hilfreiche Anordnung werden nachfolgend anhand der Zeichnung näher erläutert. Es zeigen:
Fig. 1 eine Teilschnittansicht einer ersten nicht erfindungsgemäßen Anordnung,
Fig. 2 eine Teilschnittansicht einer zweiten nicht erfindungsgemäßen Anordnung,
Fig. 3 eine erste Nicht erfindungsgemäße Variante zur Anordnung nach Fig. 2,
Fig. 4 eine zweite Variante zur Anordnung nach Fig.2, wobei diese Variante erfindungsgemäß ist,
Fig. 5 eine Ansicht einer Deckscheibe eines Kreiselpumpenlaufrads,
Fig. 6 eine Ansicht einer Grundplatte des Kreiselpumpenlaufrads,
Fig. 7 eine erste Montageposition zwischen Grundplatte und Deckscheibe (nicht erfindungsgemäß),
Fig. 8 eine zweite Montageposition zwischen Grundplatte und Deckscheibe (nicht erfindungsgemäß),
Fig. 9 ein vergrößerter Ausschnitt aus Fig. 7,
Fig. 10 ein vergrößerter Ausschnitt aus Fig. 8,
Fig. 11 eine Teilschnittansicht durch einen Zapfen,
Fig. 12 eine Draufsicht auf das montierte Kreiselpumpenlaufrad und
Fig. 13 eine räumliche Darstellung des montierten Kreiselpumpenlaufrads.

Hinweis: Bezugszeichen mit Index und entsprechende Bezugszeichen ohne Index bezeichnen namensgleiche Einzelheiten in den Zeichnungen und der Zeichnungsbeschreibung. Es handelt sich dabei um die Verwendung in einer anderen Ausführungsform, dem Stand der Technik und/oder die Einzelheit ist eine Variante. Die Ansprüche, die Beschreibungseinleitung, die Bezugszeichenliste und die Zusammenfassung enthalten der Einfachheit halber nur Bezugszeichen ohne Index.

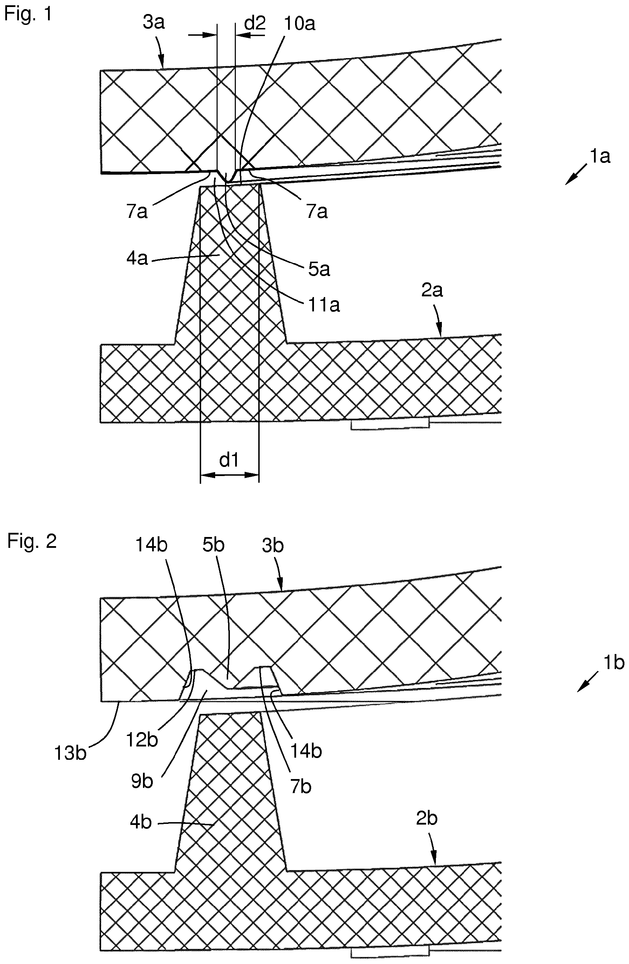

Fig. 1 zeigt eine Teilschnittansicht einer ersten Ausführungsform eines Kreiselpumpenlaufrads 1a, mit einer Grundplatte 2a und einer Deckscheibe 3a, wobei die Grundplatte 2a mit im Querschnitt trapezförmigen Pumpenflügeln 4a einstückig ist und die Deckscheibe 3a mit vorspringenden Rippen 5a einstückig ist (eine davon ist sichtbar). Die Grundplatte 2a, die Deckscheibe 3a und die Pumpenflügel 4a definieren einen Flüssigkeitskanal, durch welchen ein Fördermedium, wie Kühlwasser, förderbar ist. Die Rippen 5a springen aus der Deckscheibenoberfläche vor, so dass sich seitlich der Rippen 5a Anschlagflächen 7a ergeben, an welche eine Kopffläche 10a der Pumpenflügel 4a während und/oder nach einem Schweißvorgang anliegen kann. Die minimale Breite d1 der Pumpenflügel 4a, welche an der Kopffläche 10a gegeben ist, ist deutlich größer als die maximale Breite d2 der Rippen 5a. Die Rippen 5a werden auch als Energierichtungsgeber bezeichnet. Die Breite der Rippen 5a verringert sich in Richtung Pumpenflügel 4a und bilden eine Dachform. Wird auf die Deckscheibe 3a eine Sonotrode angelegt und die Deckscheibe 3a in Ultraschallschwingung versetzt, konzentriert sich die Schwingungsenergie auf die Rippenspitzen. Diese erhitzen sich und beginnen zu erweichen. Auch die angrenzenden Bereiche der Kopffläche 10a der Pumpenflügel 4a werden aufgeschmolzen. Beide Fügepartner werden dabei aufeinander zubewegt, so dass sich ein von den Rippen 5a aufrecht erhaltener Spalt 11a schließt und es zu einer innigen Verbindung der aneinander grenzenden Materialbereiche kommt. Dieser Vorgang wird solange fortgeführt, bis die Kopffläche 10a der Pumpenflügel 4a an den Anschlagflächen 7a der Deckscheibe anliegen.

Dabei kann überschüssiges Material der Rippen 5a in den Spalt 11a verdrängt werden.

Fig. 2 zeigt eine zweite Ausführungsform des Kreiselpumpenlaufrads 1b, mit einer Grundplatte 2b und einer Deckscheibe 3b. Die Grundplatte 2b ist identisch zu Fig. 1 ausgebildet. Die Deckscheibe 3b weist längliche Vertiefungen 9b auf, die mit den Pumpenflügeln 4b der Grundplatte 2b korrespondieren. Innerhalb der Vertiefungen 9b springen Rippen 5b aus dem Boden der Vertiefung 9b vor, erreichen aber nicht die Oberfläche 13b der Deckscheibe 3b. Auf diese Weise erlauben die Vertiefungen 9b in Zusammenwirkung mit den Pumpenflügeln 4b eine Vorzentrierung von Grundplatte 2b und Deckscheibe 3b. Die Vorzentrierung wird dabei nicht durch die Rippen 5b, sondern durch Seitenwandungen 14b der Vertiefungen und durch die Pumpenflügel 4b vorgenommen. Weiter können die Vertiefungen 9b und die Rippen 5b die Formsteifigkeit der Deckscheibe 3b verbessern. Der Boden 12b der Vertiefung 9b bildet zugleich die Anschlagfläche 7b.

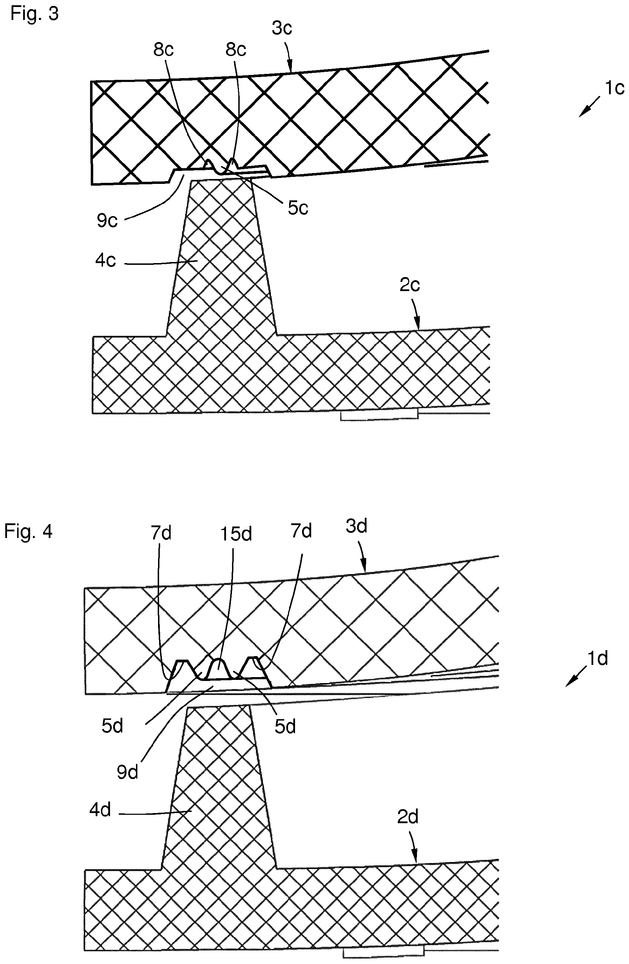

Fig. 3 zeigt eine erste Variante zur zweiten Ausführungsform des Kreiselpumpenlaufrads 1c, mit einer Grundplatte 2c und einer Deckscheibe 3c. Die Grundplatte 2c entspricht der Ausführung aus Fig. 1 und 2. Die Deckscheibe 3c weist eine Vertiefung 9c ähnlich zu Fig. 2 auf. Innerhalb der Vertiefung 9c befinden sich zwei freisparungsartige Nuten 8c, welche eine Rippe 5c seitlich begrenzen.

Fig. 4 zeigt eine zweite Variante zur zweiten Ausführungsform des Kreiselpumpenlaufrads 1d, mit einer Grundplatte 2d und einer Deckscheibe 3d. Die Grundplatte 2d entspricht der Ausführung aus den Fig. 1, 2 und 3. Die Deckscheibe 3d weist eine Vertiefung 9d ähnlich zu Fig. 2 und 3 auf. Innerhalb der Vertiefung 9d befinden sich zwei Rippen 5d, die von einem Freiraum 15d begrenzt sind. Der Boden 12d der Vertiefung 9d bildet Anschlagflächen 7d, welche einen Axialvorschub beim Schweißvorgang begrenzen. Die zweite Rippe verbessert die mechanische Festigkeit der Verbindung zwischen der Grundplatte 2d und der Deckscheibe 3d.

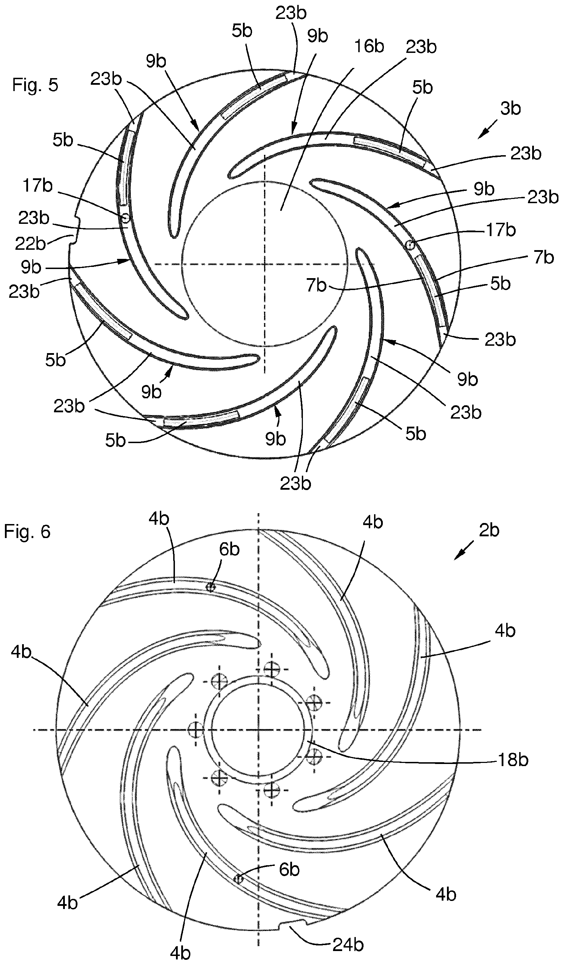

Fig. 5 zeigt eine Deckscheibe 3b der zweiten Ausführungsform gemäß Fig. 2 von der zu verschweißenden Seite aus. Die Deckscheibe 3b weist eine zentrale Öffnung 16b auf, durch welche das zu fördernde Medium einströmen kann. Die Deckscheibe 3b ist in ihrer Projektion kreisscheibenförmig und weist sieben Vertiefungen 9b auf. Aus jeder Vertiefung 9b springt jeweils eine Rippe 5b vor. Die Länge der Rippen 5b ist deutlich kürzer als die Länge der Vertiefungen 9b. Die Rippen 5b nehmen weniger als die halbe Länge der Vertiefungen 9b ein und erstrecken sich von einem peripheren Bereich aus spiralförmig nach innen. Dadurch ergeben sich beiderseits der Rippen 5b in deren Längsrichtung Anschlagzonen 23b, welche eine sichere und genaue Ausrichtung der Fügepartner erlauben. Weitere Anschlagflächen 7b seitlich der Rippen 5b (Bezugszeichen nur bei einer Rippe eingezeichnet) verstärken diesen Effekt und ergeben eine definierte satte Auflagefläche. Die Vertiefungen 9b korrespondieren mit Pumpenflügeln 4b, wie in Fig. 6 gezeigt. Zwei Vertiefungen 9b weisen zusätzlich Zapfenlöcher 17b auf, welche für eine winkellagerichtigen Montage und einer drehfesten Verbindung dienen. Eine Ausnehmung 22b erlaubt die optische Erfassung und lagerichtige Ausrichtung der Deckscheibe 3b bei der Montage.

Fig. 6 zeigt eine Grundplatte 2b, mit Pumpenflügeln 4b und Zapfen 6b. Die Zapfen 6b dienen für einen Eingriff in die Zapfenlöcher 17b aus Fig. 5. Im Zentrum der Grundplatte 2b erstreckt sich ein Innenring 18b aus der Zeichenebene heraus. Der Innenring 18b ist einstückig mit der Grundplatte 2b und begrenzt einen ringförmigen Einströmbereich des Fördermediums in das Kreiselpumpenlaufrad. Eine Freisparung 24b am Rand der Grundplatte 2b erlaubt die optische Erfassung und lagerichtige Ausrichtung der Grundplatte 2b bei der Montage.

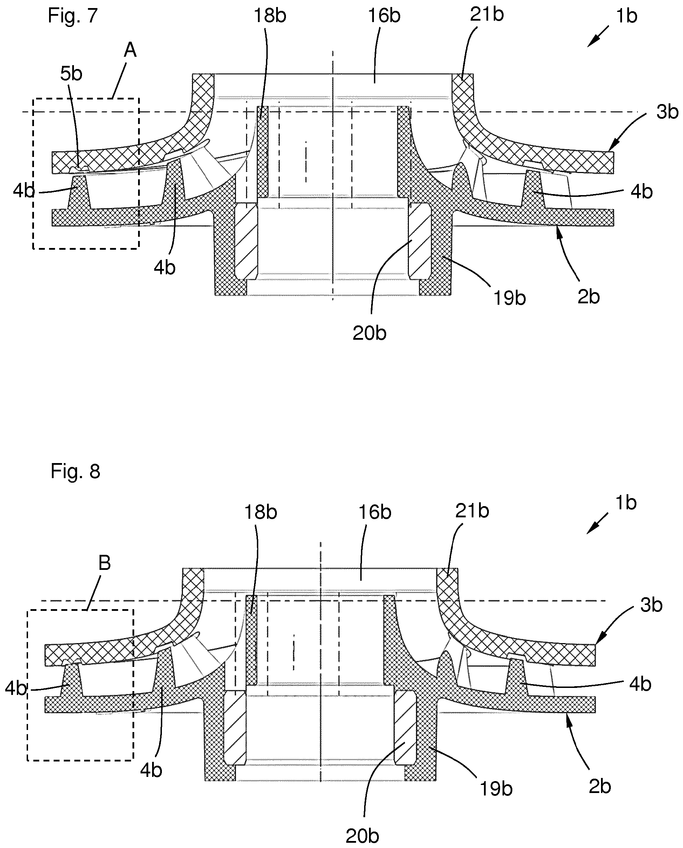

Fig. 7 zeigt mit einer Schnittansicht durch das Kreiselpumpenlaufrad 1b mit der Grundplatte 2b und der Deckscheibe 3b der zweiten Ausführungsform. Die Darstellung zeigt die Grundplatte 2b und die Deckscheibe 3b in einer ersten Montageposition, wobei ein Abstand zwischen den Fügepartnern, insbesondere den Pumpenflügeln 4b und den Rippen 5b besteht.

Fig. 8 zeigt die gleiche Anordnung wie Fig. 7, wobei die Grundplatte 2b und die Deckscheibe 3b in einer zweiten Montageposition gezeigt sind, in welcher sich die Pumpenflügel 4b und die Rippen 5b berühren und der Schweißvorgang eingeleitet wird. Weiter sind in Fig. 7 und 8 die Öffnung 16b, der Innenring 18b, ein Außenring 21b, eine Buchsenaufnahme 19b und eine Messingbuchse 20b gezeigt. Die Buchse 20b dient zum Aufpressen auf einen Permanentmagnetrotor. Zu diesem Zweck ist die Messingbuchse 20b in die Grundplatte 2b eingespritzt.

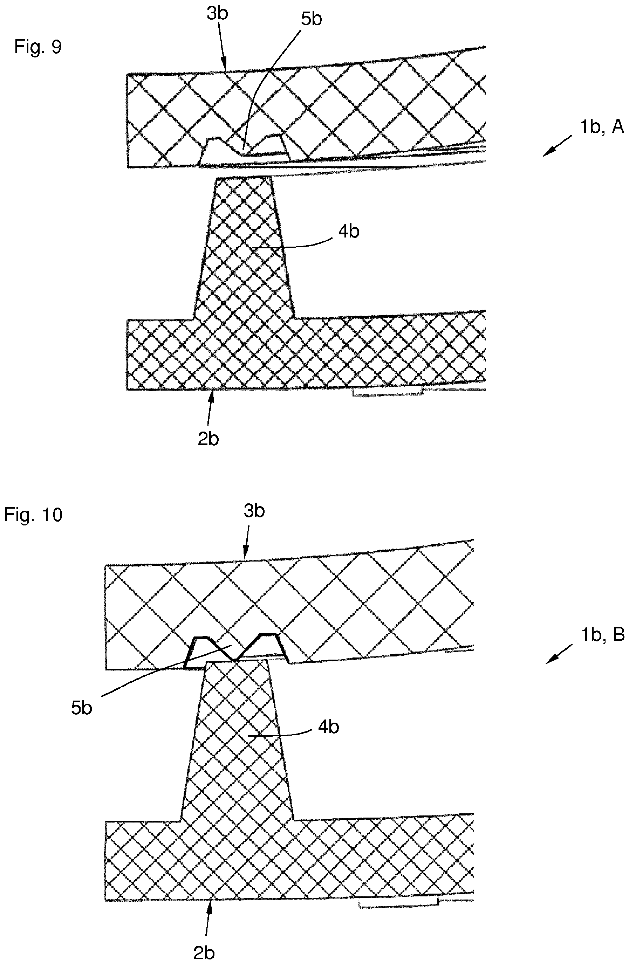

Fig. 9 zeigt einen vergrößerten Ausschnitt A aus Fig. 7 im Verbindungsbereich, mit der Grundplatte 2b, der Deckscheibe 3b, einem Pumpenflügel 4b und einer Rippe 5b, wobei der Pumpenflügel 4b einen Abstand zur Rippe 5b aufweist.

Fig. 10 zeigt einen vergrößerten Ausschnitt B aus Fig. 8 im Verbindungsbereich, mit der Grundplatte 2b, der Deckscheibe 3b, einem Pumpenflügel 4b und einer Rippe 5b, wobei der Pumpenflügel 4b und die Rippe 5b sich berühren.

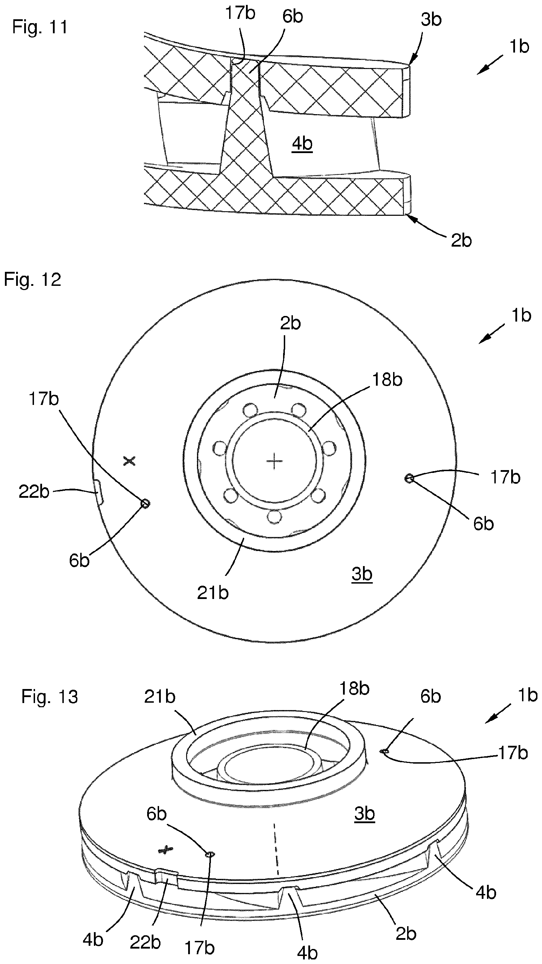

Fig. 11 zeigt eine Schnittansicht durch einen Zapfen 6b als einstückiger Bestandteil der Grundplatte 2b in montiertem Zustand. Der Zapfen 6b greift in das Zapfenloch 17b der Deckplatte 3b.

Fig. 12 zeigt eine Draufsicht auf das montierte Kreiselpumpenlaufrad 1b, mit der Grundplatte 2b, der Deckscheibe 3b, den Zapfen 6b, den Zapfenlöchern 17b, dem Innenring 18b und dem Außenring 21b. Die Deckscheibe 3b weist eine Ausnehmung 22b auf, welche zur optischen Winkellageerkennung bei der Montage dient.

Fig. 13 zeigt eine räumliche Darstellung des montierten Kreiselpumpenlaufrads 1b, mit der Grundplatte 2b, der Deckscheibe 3b, den Zapfen 6b, den Zapfenlöchern 17b, den Flügeln 4b, dem Innenring 18b, dem Außenring 21b und der Ausnehmung 22b.

### Bezugszeichenliste

- 1: Kreiselpumpenlaufrad
- 2: Grundplatte
- 3: Deckscheibe
- 4: Pumpenflügel
- 5: Rippe
- 6: Zapfen
- 7: Anschlagfläche
- 8: Nut
- 9: Vertiefung
- 10: Kopffläche
- 11: Spalt
- 12: Boden
- 13: Oberfläche
- 14: Seitenwandung
- 15: Freiraum
- 16: Öffnung
- 17: Zapfenloch
- 18: Innenring
- 19: Buchsenaufnahme
- 20: Messingbuchse
- 21: Außenring
- 22: Ausnehmung
- 23: Anschlagzone
- 24: Freisparung

## Patentansprüche

1. Verfahren zur Herstellung eines Kreiselpumpenlaufrads (1) mit einer Grundplatte (2), welche mit mehreren Pumpenflügeln (4) mit einer minimalen Wandungsdicke d1 einstückig ist und einer aus thermoplastischem Kunststoffmaterial bestehenden Deckscheibe (3), welche aufschmelzbare Rippen (5) mit einer maximalen Breite d2 an ihrer Basis aufweist, welche mit den Pumpenflügeln (4) in Deckung gebracht werden und an ihrem den Pumpenflügeln (4) zugewandten Enden deutlich schmaler sind als an ihrer Basis, die maximale Breite d2 der Rippen (5) deutlich kleiner ist als die minimale Wandungsdicke d1 der Pumpenflügel (4), die Rippen (5) jeweils in einer nutartigen Vertiefung (9), die nur 0,1 mm bis 0,4 mm breiter ist als die Pumpenflügel, in der Deckscheibe angeordnet sind und dass zwei parallel verlaufende Rippen je Pumpenflügel vorgesehen sind, mit den Verfahrensschritten: Bereitstellen einer Grundplatte (2) und einer Deckscheibe (3); Ausrichten der Deckscheibe (3) zur Grundplatte (2), Anlegen einer Sonotrode / eines Schwingungsanregungsmittels an die Deckscheibe (3) und Andrücken an die Grundplatte (2), Reibungswärmeerzeugung in den Berührungsbereichen zwischen den Rippen (5) und den Pumpenflügeln (4), Aufschmelzen der Rippen (5), Vorschub der Deckscheibe (3) in Richtung Pumpenflügel (4), inniges Verbinden der aneinander anliegenden Bereiche und Verdrängen überschüssigen Materials in einen Bereich zwischen den Pumpenflügeln (4) und der Deckscheibe (3).

2. Verfahren nach Anspruch 1, **dadurch gekennzeichnet, dass** in der Deckscheibe (3) zwei Anschlagflächen (7) vorgesehen sind, die sich beiderseits der Rippen (5) erstrecken.

3. Verfahren nach Anspruch 1 oder 2, **dadurch gekennzeichnet, dass** in der Deckscheibe (3) Anschlagzonen (23) vorgesehen sind, die sich in Rippenlängsrichtung an die Rippen (5) anschließen.

4. Verfahren nach Anspruch 2, **dadurch gekennzeichnet, dass** zwischen den Anschlagflächen (7) und den Rippen (5) jeweils eine freisparungsartige Nut (8) entlang der Rippen (5) verläuft.

5. Verfahren nach zumindest einem der vorhergehenden Ansprüche, **dadurch gekennzeichnet, dass** die Vertiefung (9) mit zunehmender Tiefe enger wird und die Pumpenflügel (4) sich an ihren der Deckscheibe (3) zugewandten Enden verjüngen.

## Claims

1. A method for producing a centrifugal pump impeller (1) with a base plate (2) which is in one piece with a plurality of pump vanes (4) with a minimum wall thickness d1, and with a cover disc (3) consisting of thermoplastic plastics material which has meltable ribs (5) with a maximum width d2 at their base, which are brought into overlap with the pump vanes (4) and are considerably narrower at their ends facing the pump vanes (4) than at their base, the maximum width d2 of the ribs (5) is considerably smaller than the minimum wall thickness d1 of the pump vanes (4), the ribs (5) in each case are arranged in the cover disc in a groove-like indentation (9) which is only 0.1 mm to 0.4 mm wider than the pump vanes, and that two parallel-running ribs per pump vane are provided, comprising the method steps: providing a base plate (2) and a cover disc (3); aligning the cover disc (3) relative to the base plate (2), applying a sonotrode / a vibration-exciting means to the cover disc (3) and pressing onto the base plate (2), generation of frictional heat in the regions of contact between the ribs (5) and the pump vanes (4), melting the ribs (5), advancing the cover disc (3) in the direction of the pump vanes (4), intimately connecting the regions which lie against each other and displacing excess material into a region between the pump vanes (4) and the cover disc (3).

2. A method according to claim 1, **characterised in that** two stop faces (7) are provided in the cover disc (3) and extend on either side of the ribs (5).

3. A method according to claim 1 or 2, **characterised in that** stop zones (23) are provided in the cover disc (3) and adjoin the ribs (5) in the longitudinal direction of the ribs.

4. A method according to claim 2, **characterised in that** a recess-like groove (8) extends along the ribs (5) in each case between the stop faces (7) and the ribs (5).

5. A method according to at least one of the preceding claims, **characterised in that** the indentation (9) becomes narrower with increasing depth and the pump vanes (4) taper at their ends facing the cover disc (3).

## Revendications

1. Procédé pour fabriquer une roue de pompe centrifuge (1) avec une plaque de base (2), laquelle est d'une seule pièce avec plusieurs ailettes de pompe (4) avec une épaisseur de paroi minimale d1 et un disque de recouvrement (3) constitué de thermoplastique, lequel présente des nervures (5) pouvant être fondues avec une largeur maximale d2 sur leur base, lesquelles sont amenées en coïncidence avec les ailettes de pompe (4) et, à leurs extrémités tournées vers les ailettes de pompe (4), sont nettement plus étroites que sur leur base, la largeur maximale d2 des nervures (5) est nettement plus petite que l'épaisseur de paroi minimale d1 des ailettes de pompe (4), les nervures (5) sont disposées dans le disque de recouvrement respectivement dans un creux (9) de type rainure, qui n'est que de 0,1 mm à 0,4 mm plus large que les ailettes de pompe, et que deux nervures s'étendant parallèlement sont prévues par ailette de pompe, avec les étapes de procédé : fourniture d'une plaque de base (2) et d'un disque de recouvrement (3) ; orientation du disque de recouvrement (3) par rapport à la plaque de base (2), mise en place d'une sonotrode / d'un moyen d'excitation vibratoire sur le disque de recouvrement (3) et pression sur la plaque de base (2), production d'une chaleur de friction dans les zones de contact entre les nervures (5) et les ailettes de pompe (4), fusion des nervures (5), avancement du disque de recouvrement (3) en direction des ailettes de pompe (4), liaison intime des zones appliquées les unes sur les autres et déplacement de l'excès de matériau dans une zone entre les ailettes de pompe (4) et le disque de recouvrement (3).

2. Procédé selon la revendication 1, **caractérisé en ce que** deux surfaces de butée (7), qui s'étendent de part et d'autre des nervures (5), sont prévues dans le disque de recouvrement (3).

3. Procédé selon la revendication 1 ou 2, **caractérisé en ce que** des zones de butée (23), qui se raccordent aux nervures (5) dans la direction longitudinale des nervures, sont prévues dans le disque de recouvrement (3).

4. Procédé selon la revendication 2, **caractérisé en ce que** respectivement une rainure (8) de type évidement s'étend entre les surfaces de butée (7) et les nervures (5) le long des nervures (5).

5. Procédé selon au moins l'une des revendications précédentes, **caractérisé en ce que** l'évidement (9) devient plus étroit à mesure que la profondeur augmente et les ailettes de pompe (4) s'amincissent à leurs extrémités tournées vers le disque de recouvrement (3).
